# EUROPÄISCHE PATENTSCHRIFT

(11) **EP 1 362 733 B1**
(45) Veröffentlichungstag und Bekanntmachung des Hinweises auf die Patenterteilung: **14.07.2010**
(21) Anmeldenummer: 02100498.1
(22) Anmeldetag: 15.05.2002
(51) Int. Cl.: B60K 15/05

(54) **Tankklappeneinheit**
Tank door unit
Porte d'obturation d'embout de remplissage

(43) Veröffentlichungstag der Anmeldung: 19.11.2003
(73) Patentinhaber: Ford Global Technologies, LLC, Dearborn, MI 48126 (US)
(72) Erfinder: Witschel, Mark, 50767 Köln (DE); Heger, Wilhelm, 50259 Pulheim (DE); Rossell, Chris, Essex SS8 9UZ (GB)
(74) Vertreter: Drömer, Hans-Carsten

(56) Entgegenhaltungen:
- EP-A- 0 990 548
- DE-A- 19 946 484

## Beschreibung

Die Erfindung bezieht sich auf eine Tankklappeneinheit zum Einbau in ein Fahrzeug, insb. in ein Kraftfahrzeug, das einen durch einen Tankdeckel verschließbaren Kraftstoffeinfüllstutzen aufweist, wobei die Tankklappeneinheit ein integriertes Verschlußsystem mit einer fernbetätigten Verriegelungseinrichtung aufweist, die eine mit der zu öffnenden und zu schließenden Tankklappe in Wirkverbindung stehende Betätigungseinheit umfaßt, wobei diese Betätigungseinheit als Teil der vormontierten Tankklappeneinheit ausgebildet ist, und wobei die Tankklappeneinheit ein mit der zu öffnenden und zu schließenden Tankklappe zusammenwirkendes Scharnierelement umfaßt und wobei die Tankklappeneinheit von außen her in eine Karosserieöffnung des Fahrzeuges einsetzbar ist.

Aus dem Stand der Technik sind verschiedene Tankklappeneinheiten bekannt. So ist z.B. aus der EP 0 736 406 A1 eine Tankklappeneinheit bekannt mit einer fernbetätigten Verriegelungseinrichtung, bei der ein Stellmotor für diese Verriegelungseinrichtung getrennt vom Tankklappenmodul am Fahrzeugaufbau befestigt wird, z.B. in Fahrtrichtung hinter dem Einfüllstutzen an der Radhauswand, wobei der Stellmotor über eine hin- und her bewegliche Entriegelungsstange auf die Tankklappe einwirkt. Bei dieser Anordnung ergibt sich ein hoher Zeit- und Arbeitsaufwand bei der Endmontage, da der Stellmotor getrennt montiert und die Entriegelungsstange durch eine Öffnung in der Radhauswand hindurch in Wirkeingriff mit dem Muldenkörper des Tankklappenmoduls gebracht werden muß.

Weiterhin ist z.B. aus der EP 0 990 548 A2 eine Tankklappeneinheit zum Einbau in ein Kraftfahrzeug bekannt, das einen durch einen Tankdeckel verschließbaren Krafteinfüllstutzen aufweist, wobei die Einheit einen Muldenkörper mit einer Durchtrittsöffnung für den Einfüllstutzen und eine schwenkbar am Muldenkörper angebrachte Tankklappe umfaßt, auf die ein Stellmotor einwirkt, wobei der Stellmotor einen Teil der vormontierten Tankklappeneinheit bildet. Es verschwenkt dabei nach dem Einbau dieser Tankklappeneinheit der Stellmotor die Tankklappe zum Öffnen und Schließen vom Tankdeckel weg bzw. auf den Tankdeckel zu. Es kann dabei gemäß einer Ausführungsform vorgesehen sein, daß der Stellmotor in der Nähe eines Schwenkgelenkes der Tankklappe angeordnet ist, wobei hier bevorzugt der Stellmotor auf einen über die Tankklappe überstehenden Schwenkarm einwirkt. Weiterhin kann bei dieser Anordnung die Tankklappeneinheit derart ausgebildet sein, daß sie von außen her in eine Karosserieöffnung des Kraftfahrzeuges einsetzbar ist. Bei dieser Anordnung ergibt sich gegenüber der zuvor erwähnten Tankklappeneinheit ein verringerter Zeit- und Arbeitsaufwand, da der Stellmotor einen Teil der vormontierten Tankklappeneinheit bildet, weiterhin ergibt sich durch die gewählte Anordnung ein verbesserter Bedienkomfort. Nachteilig ist bei dieser Anordnung die unzureichende Ausnutzung des Bauraumes, es wäre deshalb hier eine weitere Optimierung dieses Bauraumes wünschenswert.

Aus der EP 0 958 856 B1 ist ferner eine Fernentriegelung für eine Tankeinfüllstutzen- Karosserieklappe bekannt, bei der ein Riegelbolzen über eine Feder in und über einen Elektromagneten außer Eingriff mit einem Verschlußteil an der Karosserieklappe bringbar ist. Es sind dabei der Elektromagnet und der Riegelbolzen in den Seitenschenkeln eines im Querschnitt U-förmigen Kunststoffbauteiles angeordnet und die Ankerstange des Elektromagneten ist mit dem Riegelbolzen verbunden. Die Verbindung zwischen Ankerstange und Riegelbolzen kann dabei bei einer Ausführungsform über einen zweiarmigen Hebelarm und bei einer anderen Ausführungsform über die Seele einer Bowdenzuganordnung erfolgen. Es soll durch diese konstruktive Ausbildung des Elektromagneten und des Riegelbolzen in den Seitenschenkeln des Kunststoffbauteiles eine Anbringung in einer besonders montagegünstigen Lage der Karosserie ermöglicht werden. Nachteilig bei dieser Anordnung ist insb. der hohe konstruktive Aufwand bei der Verwirklichung dieser Anordnung.

Aus der DE 199 46 484 A1 ist eine Tankklappeneinheit zum Einbau in ein Kraftfahrzeug bekannt, das einen durch einen Tankdeckel verschließbaren Kraftstoffeinfüllstutzen aufweist. Der Tankdeckel ist über einen Scharnierarm drehbar in der Tankklappeneinheit gelagert. Mittels einer fernbetätigten Verriegelungseinrichtung, die als Teil der vormontierten Tankklappeneinheit ausgebildet ist, läßt sich die Tankklappe öffnen und schließen. Für die Öffnungs- und Schließbewegung weist die Verriegelungseinrichtung ein Getriebe auf, das entweder die Schwenkachse der Tankklappe antreibt oder über ein Gestänge mit der Tankklappe verbunden ist. Insgesamt ist dieser Anordnung sehr aufwendig.

In der DE 198 42 690 A1, welche den nächstliegenden bekannten Stand der Technik beinhaltet, ist eine Tanklappeneinheit offenbart, die eine scharnierseitige Verriegelung der Tanklappe aufweist. Ein längsverschieblicher Verschlußbolzen rastet in eine Ausnehmung des Scharnierarmes ein, wenn sich die Tankklappe in geschlossener Position befindet. Wesentliche Aufgabe ist es, die Tankklappe im geschlossenen Zustand vom Federdruck der an der Scharnierachse angebrachten Öffnungsfeder zu entlasten. Daraus resultiert die Ausrichtung des Verschlußbolzens parallel zum Scharnierarm der geschlossenen Tankklappe und quer zur Scharnierachse. Nachteilig an dieser Anordnung ist zum einen, daß zusätzlich zum Verschlußbolzen eine dem Scharnier an der Tankklappe gegenüberliegende Arretierungsvorrichtung vorgesehen sein muß, damit die Tankklappe im geschlossenen Zustand nicht vorsteht. Außerdem benötigt diese Anordnung relativ viel Bauraum, so daß eine Montage der kompletten Tankklappeneinheit von außen in die vorgesehen Karosserieöffnung kaum möglich> ist.

Ausgehend von diesen bekannten Tankklappeneinheiten liegt der Erfindung die Aufgabe zugrunde, die bekannten Anordnungen unter Beibehaltung der bisherigen Vorteile in der Weise zu verbessern bzw. weiterzuentwickeln, daß bei einer vormontierbaren Tankklappeneinheit der zur Verfügung stehende, oftmals knapp bemessene Bauraum besser als bisher ausgenutzt wird, wobei die gewünschte Anordnung trotzdem hinsichtlich ihrer Funktionalität und ihres Bedienkomforts hohen Ansprüchen genügen soll. Die gewünschte Anordnung soll außerdem konstruktiv einfach aufgebaut und kostengünstig herstellbar sein.

Die Aufgabe wird erfindungsgemäß dadurch gelöst, daß das integrierte Verschlußsystem im wesentlichen seitlich an dem Scharnierelement der Tankklappeneinheit angeordnet ist. Auf diese Weise wird erstmalig mit einfachen Mitteln die Möglichkeit geschaffen, eine vormontierbare Tankklappeneinheit auszubilden, die bzgl. ihrer Funktionalität und ihres Bedienkomforts hohen Ansprüchen genügt und bei der trotzdem durch das Anbringen des integrierten Verschlußsystems seitlich an dem Scharnierelement der Tankklappeneinheit nahezu eine Optimierung der Ausnutzung des Bauraumes erreicht wird. Die erfindungsgemäße Tankklappeneinheit ist dabei außerdem konstruktiv einfach aufgebaut und deshalb kostengünstig herstellbar. Die erfindungsgemäße Tankklappeneinheit ist auch einfach und schnell an dem betreffenden Fahrzeug, insb. Kraftfahrzeug anbringbar; die Tankklappeneinheit kann komplett vormontiert angeliefert werden und wird von außen in die Fahrzeugseitenwand montiert. Ein Vorteil gegenüber den bisherigen Systemen liegt auch darin, daß bei dieser Lösung bei der Montage kein Zugang vom Fahrzeuginnenraum oder der Fahrzeugunterseite notwendig ist. Es muß zur Betätigung des Verschlußsystems lediglich ein Kabel, wie z.B. ein elektrisches oder eine Bowdenzuganordnung im Fahrzeug vormontiert sein, welches vor dem Einbau an die Klappenanordnung anzuschließen ist.

Bei der vorliegenden Erfindung umfaßt die Betätigungseinheit der fernbetätigten Verriegelungseinrichtung für die zu öffnende und zu schließende Tankklappe einen Stellmotor. Über diesen Stellmotor kann das Öffnen und Schließen der Tankklappe in geeigneter Weise erfolgen.

Nach einem weiteren Merkmal der vorliegenden Erfindung umfaßt die Betätigungseinheit der fernbetätigten Verriegelungseinrichtung zum Zusammenwirken mit dem Scharnierelement, insb. mit dem Scharnierarm, eine Welle. Es greift dabei zum Öffnen und Schließen der Tankklappe diese Welle in den Scharnierarm des Scharnierelementes ein und bewirkt ein Öffnen und Schließen der Tankklappe auf der Scharnierseite, wodurch dann eine bessere Ausnutzung des Bauraumes erreicht wird.

Nach einem weiteren Merkmal der vorliegenden Erfindung ist zur Betätigung der fernbetätigten Verriegelungseinrichtung eine elektrische Betätigungseinrichtung ausgebildet. In diesem Falle ist zur Betätigung des Verschlußsystems lediglich ein entsprechendes elektrisches Kabel in dem Fahrzeug vorzumontieren, das vor dem Einbau an die Klappenanordnung anzuschließen ist.

Ferner kann (nicht beansprucht) vorgesehen sein, daß zur Betätigung der fernbetätigten Verriegelungseinrichtung eine Bowdenzuganordnung ausgebildet ist. Hier ist zur Betätigung des Verschlußsystems lediglich eine entsprechende Bowdenzuganordnung in dem Fahrzeug vorzumontieren, die vor dem Einbau an die Klappenanordnung anzuschließen ist.

Die Erfindung ist in den Figuren der Zeichnung in einem Ausführungsbeispiel dargestellt. Es zeigt:
- Fig. 1: eine schematische Teil- Vorderansicht einer ersten Ausführungsform der erfindungsgemäßen Tankklappeneinheit,
- Fig. 2: eine schematische Teil- Rückansicht der ersten Ausführungsform der erfindungsgemäßen Tankklappeneinheit gemäß Fig.1,
- Fig. 3: eine schematische Teil- Schnittansicht der ersten Ausführungsform der erfindungsgemäßen Tankklappeneinheit.

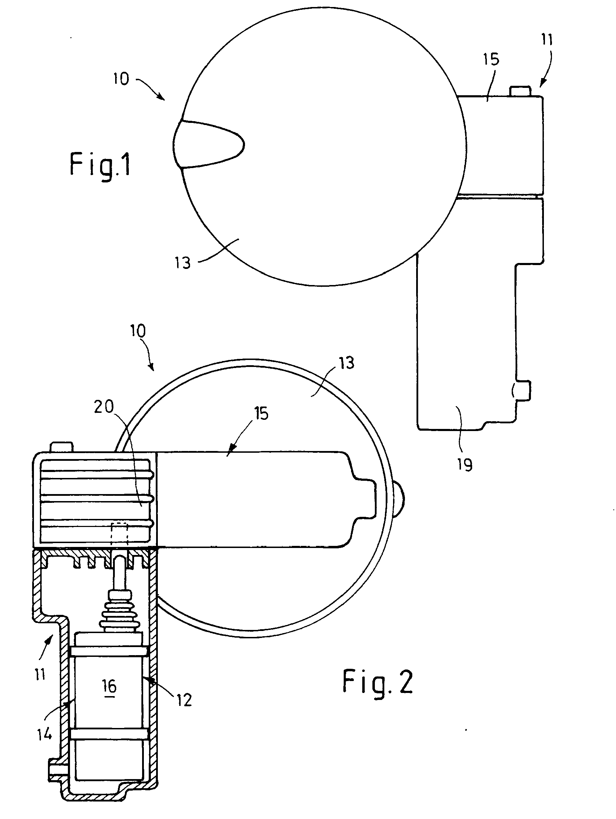

Die erfindungsgemäße Tankklappeneinheit ist generell mit 10 bezeichnet. Diese Tankklappeneinheit 10 ist vorgesehen für den Einbau in ein Fahrzeug, insb. in ein Kraftfahrzeug, das einen durch einen Tankdeckel verschließbaren Kraftstoffeinfüllstutzen aufweist. Es ist dazu in den Fig.1 bis 3 der Zeichnung der die mit 13 bezeichnete Tanklappe enthaltende Teil der erfindungsgemäßen Tankklappeneinheit 10 dargestellt, der Kraftstoffeinfüllstutzen sowie der Tankdeckel können eine an sich bekannte Ausbildung aufweisen und sind in den Fig.1 bis 3 der Zeichnung nicht dargestellt.

Die erfindungsgemäße Tankklappeneinheit 10 weist ein integriertes, mit 11 bezeichnetes Verschlußsystem auf, mit einer fernbetätigten Verriegelungseinrichtung 12, die ihrerseits eine mit der zu öffnenden und zu schließenden Tankklappe 13 in Wirkverbindung stehende Betätigungseinheit 14 umfaßt. Diese Betätigungseinheit 14 ist dabei als Teil der vormontierten Tankklappeneinheit 10 ausgebildet. Die Tankklappeneinheit 10 umfaßt weiterhin ein mit der zu öffnenden und zu schließenden Tankklappe 13 zusammenwirkendes, mit 15 bezeichnetes Scharnierelement, wobei dazu in den Fig.1 bis 3 der mit 20 bezeichnete Scharnierarm des Scharnierelementes 15 dargestellt ist, im weiteren ist die Tankklappeneinheit 10 derart ausgebildet, daß sie von außen her in eine Karosserieöffnung des Fahrzeuges einsetzbar ist.

Die Tankklappeneinheit 10 ist nun erfindungsgemäß derart ausgebildet, siehe dazu insb. die Fig.2 der Zeichnung, daß das integrierte Verschlußsytem 11 im wesentlichen seitlich an dem Scharnierelement 15 der Tankklappeneinheit 10 angeordnet ist. Dadurch wird erstmals eine vormontierbare Tankklappeneinheit 10 geschaffen, die bzgl. der Funktionseigenschaften und des Bedienkomforts ebenso wie teilweise die bereits bekannten Lösungen hohen Anforderungen genügt und zusätzlich durch das Abbringen des integrierten Verschlußsystems 11 seitlich an dem Scharnierelement 15 der Tankklappeneinheit 10 nahezu eine Optimierung der Ausnutzung des Bauraumes erreicht wird. Die erfindungsgemäße Tankklappeneinheit 10 ist auch einfach und schnell an dem betreffenden Fahrzeug, insb. Kraftfahrzeug anbringbar, und zwar kann die Tankklappeneinheit 10 komplett vormontiert angeliefert und von außen in die Fahrzeugseitenwand montiert werden. Bei der Montage ergibt sich dabei zum einen der Vorteil, daß durch das seitliche Vorsehen des integrierten Verschlußsystems 11 an dem Scharnierelement 15 die Tankklappeneinheit 10 als kompaktes Bauteil besser zu montieren ist als die bekannten Ausführungsformen, bei denen Scharnierelement und Verschlußsystem weiter auseinanderliegen, und bei denen oftmals ein Nachmontieren erforderlich ist. Ein weiterer Vorteil gegenüber den bisherigen Systemen liegt aber auch darin, daß bei der Montage kein Zugang vom Fahrzeuginnenraum oder der Fahrzeugunterseite notwendig ist. Es muß zur Betätigung des Verschlußsystems 11 lediglich ein Kabel, wie z.B. ein elektrisches oder eine Bowdenzuganordnung im Fahrzeug vormontiert sein, welches vor dem Einbau an die Klappenanordnung anzuschließen ist. Die erfindungsgemäße Tankklappeneinheit 10 ist dabei auch konstruktiv einfach aufgebaut und daher kostengünstig herstellbar.

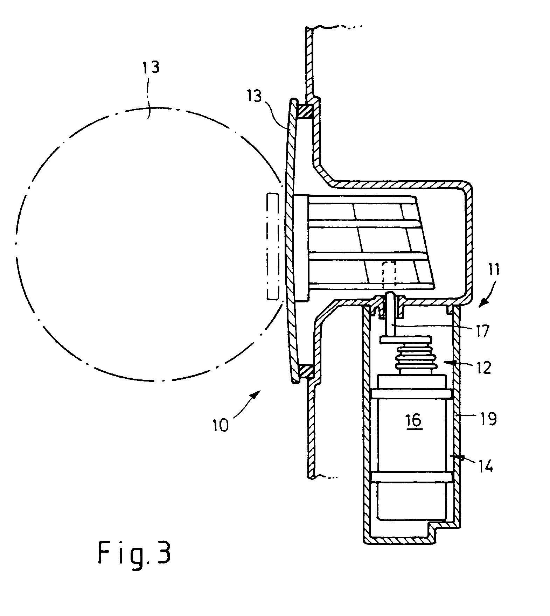

Bei dem in den Fig.1 bis 3 der Zeichnung dargestellten Ausführungsbeispiel umfaßt die Betätigungseinheit 14 der fernbetätigten Verriegelungseinrichtung 12 für die zu öffnende und zu schließende Tankklappe 13 einen Stellmotor 16. Es umfaßt dabei, siehe insb. die Fig.3, die den Stellmotor 16 aufweisende Betätigungseinheit 14 der fernbetätigten Verriegelungseinrichtung 12 zum Zusammenwirken mit dem Scharnierelement 15, d.h. in diesem Falle mit dem Scharnierarm 20, eine Welle 17. Der Stellmotor 16 sowie Teile der mit diesem gekoppelten Welle 17 können in üblicher Weise in einem nicht bezeichneten Gehäuse angeordnet sein, außerdem sind der Stellmotor 16 sowie Teile der mit diesem gekoppelten Welle 17 in dem dargestellten Ausführungsbeispiel von einem Spritzschutz 19 umgeben. Weiterhin ist der Scharnierarm 20 einerseits mit der Tankklappe 13 verbunden und andererseits von einem Gehäuse 18 umgeben, daß unterseitig zum Durchtritt der Welle 17 eine nicht bezeichnete Durchbrechung aufweist.

Zum Öffnen bzw. Schließen der Tankklappe 13 greift dabei die Welle 17 in den Scharnierarm 20 des Scharnierelementes 15 ein und bewirkt ein Öffnen und Schließen der Tankklappe 13 auf der Scharnierseite, es wird dadurch eine bessere Ausnutzung des Bauraumes erreicht.

Bei dem dargestellten Ausführungsbeispiel ist zur Betätigung der fernbetätigten Verriegelungseinrichtung 12 eine elektrische Betätigungseinrichtung ausgebildet, es ist dazu in der Fig.3 eine elektrische Zuleitung wie ein Kabel od. dgl. angedeutet dargestellt. Alternativ dazu kann aber zur Betätigung der fernbetätigten Verriegelungseinrichtung 12 auch z.B. eine hier nicht dargestellte Bowdenzuganordnung vorgesehen sein.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So sind insb. Abwandlungen bzgl. der Ausbildung der Tankklappeneinheit, insb. von deren Scharnierelement möglich, sowie auch Abwandlungen bzgl. der Ausbildung des integrierten Verschlußsystems, insb. der Betätigungseinheit von deren fernbetätigtem Verriegelungssystem.

### BEZUGSZEICHENLISTE

- 10: Tankklappeneinheit
- 11: integriertes Verschlußsystem
- 12: fernbetätigte Verriegelungseinrichtung
- 13: Tankklappe
- 14: Betätigungselement (für 13)
- 15: Scharnierelement
- 16: Stellmotor
- 17: Welle (von 14)
- 18: Gehäuse (hinter 13)
- 19: Spritzschutz (für 16)
- 20: Scharnierarm

## Patentansprüche

1. Tankklappeneinheit (10) zum Einbau in ein Fahrzeug, insb. in ein Kraftfahrzeug, das einen durch einen Tankdeckel verschließbaren Kraftstoffeinfüllstutzen aufweist, wobei
- die Tankklappeneinheit (10) ein integriertes Verschlußsystem (11) mit einer fernbetätigten Verriegelungseinrichtung (12) aufweist, die eine mit der zu öffnenden und zu schließenden Tankklappe (13) in Wirkverbindung stehende Betätigungseinheit (14) umfaßt,
- diese Betätigungseinheit (14) als Teil der vormontierten Tankklappeneinheit (10) ausgebildet ist,
- die Tankklappeneinheit (10) ein mit der zu öffnenden und zu schließenden Tankklappe (13) zusammenwirkendes Scharnierelement (15) umfaßt,
- die Tankklappeneinheit (10) von außen her in eine Karosserieöffnung des Fahrzeuges einsetzbar ist,
- das integrierte Verschlußsystem (11) im wesentlichen seitlich an dem Scharnierelement (15) der Tankklappeneinheit (10) angeordnet ist,
- die Betätigungseinheit (14) der fernbetätigten Verriegelungseinrichtung (12) zum Zusammenwirken mit einem Scharnierarm (20) des Scharnierelements (15) eine Welle (17) umfaßt,
- die Welle (17) zum Öffnen bzw. Schließen der Tankklappe (20) in den Scharnierarm (20) greift, und
- die Betätigungseinheit (14) der fernbetätigten Verriegelungseinrichtung (12) für die zu öffnende und zu schließende Tankklappe (13) einen Stellmotor (16) umfaßt.

2. Tankklappeneinheit nach Anspruch 1,
**dadurch gekennzeichnet, daß**
zur Betätigung der fernbetätigten Verriegelungseinrichtung (12) eine elektrische Betätigungseinrichtung ausgebildet ist.

## Claims

1. Tank flap unit (10) for installing in a vehicle, in particular in a motor vehicle which has a fuel filler neck which can be closed by a tank cover, wherein
- the tank flap unit (10) has an integrated closure system (11) with a remote-actuated locking device (12) which comprises an actuating unit (14) operatively connected to the tank flap (13) to be opened and to be closed,
- said actuating unit (14) is designed as part of the preassembled tank flap unit (10),
- the tank flap unit (10) comprises a hinge element (15) which interacts with the tank flap (13) to be opened and to be closed,
- the tank flap unit (10) can be inserted from the outside into a body opening of the vehicle,
- the integrated closure system (11) is arranged substantially laterally on the hinge element (15) of the tank flap unit (10),
- the actuating unit (14) of the remote-actuated locking device (12) comprises a shaft (17) for interaction with a hinge arm (20) of the hinge element (15),
- the shaft (17) engages in the hinge arm (20) in order to open or close the tank flap (20), and
- the actuating unit (14) of the remote-actuated locking device (12) for the tank flap (13) which is to be opened and to be closed comprises a servomotor (16).

2. Tank flap unit according to Claim 1, **characterized in that** an electric actuating device is formed for the actuation of the remote-actuated locking device (12).

## Revendications

1. Unité de volet d'obturation du bouchon de réservoir (10) devant être montée dans un véhicule, notamment dans un véhicule automobile, qui présente une tubulure de remplissage de carburant pouvant être fermée par une trappe d'obturation, dans laquelle
- l'unité de volet d'obturation du bouchon de réservoir (10) présente un système de fermeture intégré (11) avec un dispositif de verrouillage à commande à distance (12), qui comprend un volet d'obturation du bouchon de réservoir (13) pouvant être ouvert et fermé, en liaison fonctionnelle avec une unité de commande (14),
- cette unité de commande (14) est réalisée en tant que partie de l'unité de volet d'obturation du bouchon de réservoir (10) prémontée,
- l'unité de volet d'obturation du bouchon de réservoir (10) comprend un élément de charnière (15) coopérant avec le volet d'obturation du bouchon de réservoir (13) pouvant être ouvert et fermé,
- l'unité de volet d'obturation du bouchon de réservoir (10) peut être insérée depuis l'extérieur dans une ouverture de la carrosserie du véhicule,
- le système de fermeture intégré (11) est disposé essentiellement latéralement sur l'élément de charnière (15) de l'unité de volet d'obturation du bouchon de réservoir (10),
- l'unité de commande (14) du dispositif de verrouillage à commande à distance (12) pour le volet d'obturation du bouchon de réservoir (13) pouvant être ouvert et fermé, comprend un moteur de réglage (16).

2. Unité de volet d'obturation du bouchon de réservoir selon la revendication 1,
**caractérisée en ce que**
pour l'actionnement du dispositif de verrouillage à commande à distance (12), on prévoit un dispositif de commande électrique.
